# EUROPÄISCHE PATENTSCHRIFT

(11) **EP 2 147 136 B1**
(45) Veröffentlichungstag und Bekanntmachung des Hinweises auf die Patenterteilung: **09.05.2012**
(21) Anmeldenummer: 08758509.7
(22) Anmeldetag: 14.05.2008
(51) Int. Cl.: D01D 1/02, D01F 6/60, B29C 47/38, B29C 47/58

(54) **VERFAHREN UND ANLAGE ZUM HERSTELLEN EINER SPINNLÖSUNG FÜR DIE HERSTELLUNG EINER POLYMERFASER**
METHOD AND SYSTEM FOR PRODUCING A SPINNING SOLUTION FOR PRODUCING A POLYMER FIBER
PROCÉDÉ ET DISPOSITIF DE FABRICATION D'UNE SOLUTION DE FILAGE POUR LA FABRICATION D'UNE FIBRE POLYMÈRE

(30) Priorität: 14.05.2007 CH 801072007
(43) Veröffentlichungstag der Anmeldung: 27.01.2010
(73) Patentinhaber: LIST Holding AG, 4422 Arisdorf (CH)
(72) Erfinder: GEISLER, Reinhard, 79650 Schopfheim (DE); LICHTI, Pierre, CH-4132 Muttenz (CH); ISENSCHMID, Thomas, CH-4312 Magden (CH)
(74) Vertreter: Weiss, Peter
(86) Internationale Anmeldenummer: PCT/EP2008/003857
(87) Internationale Veröffentlichungsnummer: WO 2008/138597

(56) Entgegenhaltungen:
- EP-A- 0 517 068
- US-A- 3 873 072
- US-A- 4 368 615
- US-A- 5 756 031
- US-A- 5 882 563
- ANONYMOUS: "Improved homogeneity of solutions of aromatic polyamides" 1. August 1983 (1983-08-01), RESEARCH DISCLOSURE, MASON PUBLICATIONS, HAMPSHIRE, GB , XP007108972 ISSN: 0374-4353 das ganze Dokument

## Beschreibung

Die Erfindung betrifft ein Verfahren zum Herstellen einer Spinnlösung für die Herstellung einer Polymerfaser, insbesondere einer Aramid-Faser, wobei das Polymer mit einem Lösungsmittel versetzt, vermischt, aufgeschmolzen, homogenisiert und entgast und sodann ausgetragen wird, sowie eine Anlage hierfür.

### STAND DER TECHNIK

Für viele Fälle im privaten und industriellen Bereich werden heute Kunststofffasern benötigt. Beispielsweise gilt dies für alle Arten von Kleidungsstücken, Verstärkungsgewebe, technische Textilien, Verschleissbeläge, Filter usw.. Zu diesem Zweck wird das entsprechende Polymer, welches meist stückig oder in Pulverform vorliegt, mit einem Lösungsmittel vermischt, aufgeschmolzen, homogenisiert, entgast und dann im noch viskosen Zustand oder nach Zwischentransport wieder aufgeschmolzen Düsen zugeführt, aus denen es dann zur Bildung der Faser mit hohem Druck ausgepresst wird.

Aus der US 5,882,563 ist beispielsweise ein Verfahren zur Herstellung von Fasern aus poly (p-Phenylene terephthalamide) bekannt, bei denen Schwefelsäure, die unter ihren Koagulationspunkt gekühlt wurde, als Eis mit p-Aramid vermischt wird, um eine Feststoffmischung zu erhalten. Danach wird diese Feststoffmischung wieder aufgeheizt und geschmolzen und diese Flüssigkeit durch Spinndüsen unter Druck ausgebracht. Das Aufheizen dieser Feststoffmischung geschieht in zwei separaten Zonen, nämlich einer Schmelzzone und einer Druckaufbauzone, wobei das Polymer zumindest in der Schmelzzone geknetet und gemischt wird.

Die US 5,756,031 beschreibt ein Verfahren zur Herstellung von Polymerfaser unter Verwendung einer Lösung aus einem Polymer in mineralischer Säure, welche durch eine Spinndüse extrudiert wird.

Die US 4,368,615 offenbart die Herstellung einer Faser aus einem Polyamid, welche durch Ausführung eines Spinnverfahrens erhältlich ist, wobei die Spinnmasse aus einer Mischung konzentrierter Schwefelsäure und einem Polyamid besteht. Die Spinnmasse wird hergestellt durch Abkühlen von konzentrierter Schwefelsäure auf unter ihren Koagulationspunkt, Zusammenbringen der so gekühlten Schwefelsäure mit dem Polyamid und Vermischen der beiden Komponenten zur Bildung einer Feststoffmischung, die auf Spinntemperatur erwärmt wird.

In ANONYMOUS: "Improved homogeneity of sulutions of aromatic polyamides" 1. August 1983 (1983-08-01), RESEARCH DISCLOSURE, MASON PUBLICATIONS, HAMPSHIRE, GB, XP007108972 ISSN: 0374-4353, wird die Herstellung homogener Polyamidlösungen In konzentrierter Schwefelsäure unter Zuhilfenahme eines Zweiwellenextruders beschrieben.

### AUFGABE

Aufgabe der vorliegenden Erfindung ist, ein Verfahren und eine Anlage der o.g. Art zu beschreiben, die dem Produkt eine lange Verweilzeit zur Verfügung stellen, bei gleichzeitiger Erhöhung der Scherraten in der Anlage und grösstmöglicher Flexibilität, Prozesssicherheit und verminderten Anlagenbestandteilen.

### LÖSUNG DER AUFGABE

Zur Lösung der Aufgabe führt, dass als Lösungsmittel flüssige Schwefelsäure verwendet wird und zumindest das Mischen, Homogenisieren und Entgasen in einem vorzugsweise kontinuierlich betriebenen Ein- oder Zweiwellenknetreaktor erfolgt.

Damit entfällt das bisher erforderliche Kühlen der Schwefelsäure unter den Koagulationspunkt, was das ganze Verfahren wesentlich vereinfacht und verbilligt.

Ferner wurden bisher in der Regel Einwellenknetreaktoren verwendet, die jedoch eine begrenzte Scherrate aufweisen und auch in der Drehmomentaufnahme begrenzt sind. Mit dem Zweiwellenknetreaktor, beispielsweise von dem Typ CRP oder CKR der Firma List, beschrieben in der EP 0 517 068 lassen sich dagegen wesentlich bessere Resultate erzielen, vor allem, was die Verweilzeit des Produktes in dem Knetreaktor, das höhere Volumen des Knetreaktors, die freie Produktoberfläche und die Robustheit des Systems anbelangt. Hervorzuheben ist vor allem, dass die drei Prozessschritte, nämlich Mischen, Homogenisieren und Entgasen in einem einzigen Knetreaktor erfolgt. Lediglich für das Vormischen kann u. U. auch ein separater Mischer vorgesehen werden.

Durch die grosse Produktoberfläche ergibt sich ein gutes Entgasen und eine intensive Oberflächenerneuerung beim Kneten.

Bei Zweiwellen-Knetapparaten können die beiden Wellen mit gleichen oder auch mit unterschiedlichen Geschwindigkeiten betrieben werden, wodurch die Scherrate und das Mischen des Produktes wesentlich besser ist, als in einem Einwellenknetreaktor. Des weiteren gibt es in einem Zweiwellenknetreaktor kaum tote Zonen, in denen sich Produktablagerungen aufbauen können, die dann in dem Knetreaktor verbleiben und zu einer Degradation des Produktes führen können.

Ein weiteres Merkmal der vorliegenden Erfindung bezieht sich besonders auf die Abfolge der Eingabe von flüssiger Schwefelsäure und Polymerpulver. Es wurde festgestellt, dass gerade die Abfolge der Dosierreihenfolge zu wesentlichen Verbesserungen führt. Das Polymerpulver, welches zuerst eingegeben wird, kann sich mit der später eingegebenen Schwefelsäure wesentlich intensiver vermischen. Die Pulverbestandteile werden gleichmässig von der Schwefelsäure ummantelt.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematische, blockschaltbildliche Darstellung des erfindungsgemässen Verfahrens zum Herstellen einer Spinnlösung für die Herstellung einer Polymerfaser;
Figur 2 eine schematische, blockschaltbildliche Darstellung eines weiteren Ausführungsbeispiels eines erfindungsgemässen Verfahrens zur Herstellung einer Spinnlösung für die Herstellung einer Polymerfaser;
Figur 3 eine schematische, blockschaltbildliche Darstellung eines weiteren Ausführungsbeispiels einer Anlage zum Herstellen einer Spinnlösung für die Herstellung einer Polymerfaser.

Eine erfindungsgemässe Anlage zum Herstellen einer Spinnlösung für die Herstellung einer Polymerfaser weist zentral einen zweiwelligen Knetreaktor 1 auf, wie er beispielsweise in der EP 0 517 068 beschrieben ist. Dieser Knetreaktor 1 besitzt zwei Eingabestutzen 2 und 3, wobei der Eingabestutzen 3 für flüssige Schwefelsäure und der Eingabestutzen 2 für die Zugabe des Polymers in Pulverform benutzt wird. In die Zuleitung für das Lösungsmittel kann noch ein Vorkühler 12 eingeschaltet sein.

Ferner ist auf dem Knetreaktor noch ein Brüdendom 4 erkennbar, über den beim Mischen und Homogenisieren des Produktes in dem Knetreaktor 1 noch vorhandene Gase abgezogen werden.

An den Knetreaktor 1 schliesst eine Austragseinrichtung 5 an. Diese ist im vorliegenden Ausführungsbeispiel als zweiwellige Austragseinrichtung ausgebildet. Durch sie gelangt das Mischprodukt aus dem Knetreaktor 1 zu einer nicht näher gezeigten Pumpe, welche dann das Mischprodukt durch entsprechende Düsen zur Herstellung der Fasern auspresst.

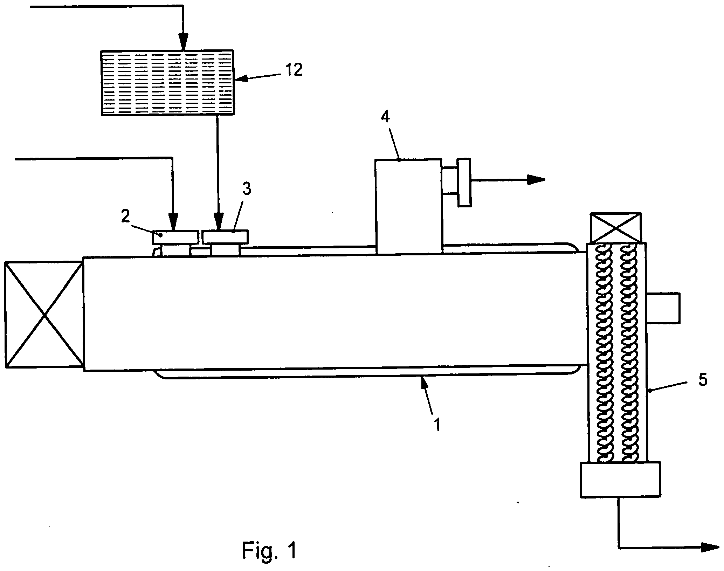

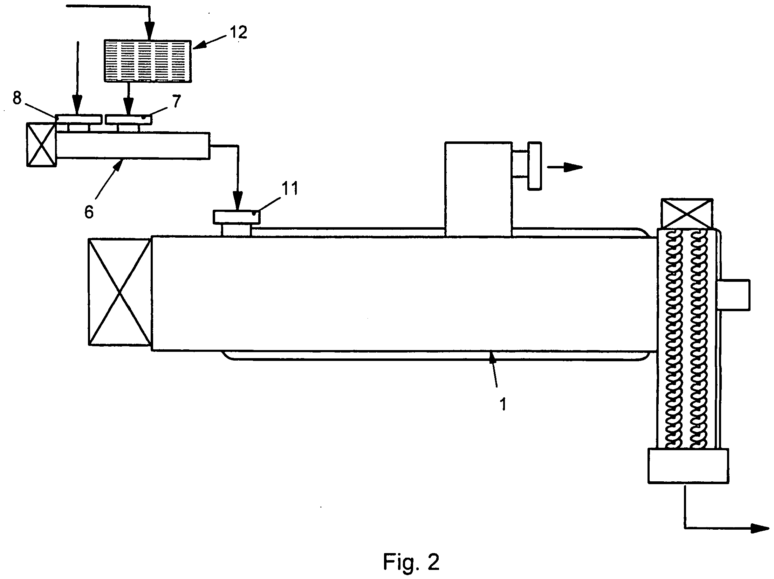

Das Ausführungsbeispiel der erfindungsgemässen Vorrichtung gemäss Figur 2 unterscheidet sich von demjenigen nach Figur 1 dadurch, dass eine Vormischung von Polymer und Schwefelsäure vor dem Knetreaktor 1 in einem Mischer 6 erfolgt und dann das Mischprodukt bereits vorgemischt und bevorzugt dosiert durch einen einzigen Eingabestutzen 11 in den Knetreaktor 1 eingeführt wird. Polymer und Schwefelsäure werden in den Mischer 6 durch zwei Dosierstutzen 7 und 8 eingebracht.

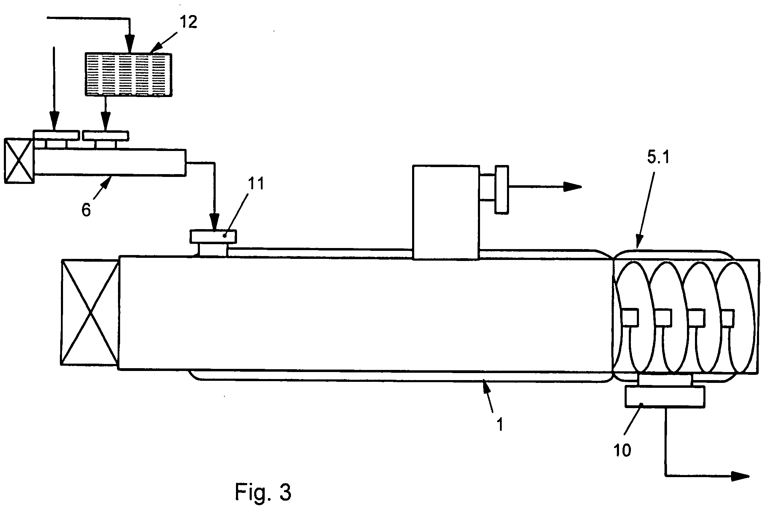

Das Ausführungsbeispiel einer erfindungsgemässen Anlage gemäss Figur 3 unterscheidet sich von demjenigen nach Figur 2 dadurch, dass an den Knetreaktor 1 eine einwellige Austragsschnecke 5.1 anschliesst, deren Achse 9 axial zu dem Knetreaktor 1 verläuft. Hierdurch wird einen Druck zwischen einer Austragsöffnung 10 und dem Inneren des Knetreaktors 1 aufgebaut, so dass das Mischprodukt kontinuierlich aus dem Knetreaktor 1 ausgetragen werden kann.

Die Funktionsweise der vorliegenden Erfindung ist folgende:

In dem gezeigten Ausführungsbeispiel gemäss Figur 1 wird in einem kontinuierlichen Knetreaktor 1, insbesondere in einem Mischkneter der Firma List vom Typ CRP oder CKR durch die Eingabestutzen 2 und 3 Schwefelsäure und Polymerpulver, insbesondere p-Polyphenyl-Terephthalamid (PPTA) eingegeben. Dieser Knetreaktor arbeitet mit zwei waagrecht angeordneten Wellen mit entsprechenden Knetelementen, wobei sowohl der Aussenmantel als auch die Wellen und ggf. die Knetelement beheizbar sind.

Das Polymerpulver, welches in intensivem Kontakt mit dem Lösungsmittel, in diesem Fall Schwefelsäure, kommt, setzt eine gewisse Lösungsenthalpie frei. Diese Wärmemenge kombiniert mit der Kontaktwärmetransportmenge durch die Knetreaktorwände und Knetwellen führt zu einer schnellen Aufheizung und Schmelze der Mischung.

Dabei wird es gleichzeitig von den Eingabestutzen 2, 3 in Richtung der Austragseinrichtung 5 transportiert. Während diesem Transport findet wiederum ein Entgasen des Mischproduktes statt, wobei die Gase durch den Brüdendom 4 abgezogen werden. Das so innig durchmischte Produkt wird dann durch die Austragseinrichtung 5 ausgetragen.

Nach dem Ausführungsbeispiel gemäss Figur 2 erfolgt ein Vormischen des Polymerpulvers mit der Schwefelsäure. Dabei hat es sich herausgestellt, dass bei dieser Abfolge die Mischung zwischen Polymerpulver und Schwefelsäure wesentlich intensiver wird. Erst danach wird das bereits vorgemischte Produkt in den Knetreaktor 1 eingegeben, wo es homogenisiert und entgast wird. Der Austrag erfolgt wiederum durch die Austragseinrichtung 5, jedoch kann auch, wie in Figur 3 gezeigt, eine einwellige Austragsvorrichtung 5.1 benutzt werden.

### Bezugszeichenliste

| | | | | | |
|---|---|---|---|---|---|
| 1 | Knetreaktor | 34 | | 67 | |
| 2 | Eingabestutzen | 35 | | 68 | |
| 3 | Eingabestutzen | 36 | | 69 | |
| 4 | Brüdendom | 37 | | 70 | |
| 5 | Austragseinrichtung | 38 | | 71 | |
| 6 | Mischer | 39 | | 72 | |
| 7 | Dosierstutzen | 40 | | 73 | |
| 8 | Dosierstutzen | 41 | | 74 | |
| 9 | Achse | 42 | | 75 | |
| 10 | Austragsöffnung | 43 | | 76 | |
| 11 | Eingabestutzen | 44 | | 77 | |
| 12 | Vorkühler | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Herstellen einer Spinnlösung für die Herstellung einer Polymerfaser, insbesondere einer p-Aramid-Faser, wobei das Polymer mit einem Lösungsmittel versetzt, vermischt, aufgeschmolzen, homogenisiert und entgast und sodann ausgetragen wird,
**dadurch gekennzeichnet,**
**dass** als Lösungsmittel flüssige Schwefelsäure verwendet wird und zumindest das Mischen, Homogenisieren und Entgasen in einem Ein- oder Zweiwellenknetreaktor (1) erfolgt, welcher vorzugsweise kontinuierlich betrieben wird.

2. Verfahren nach Anspruch 1, **dadurch gekennzeichnet, dass** die Behandlung des Polymers und der Schwefelsäure unter Vakuum erfolgt.

3. Verfahren nach Anspruch 1 oder 2, **dadurch gekennzeichnet, dass** die Schwefelsäure mit dem Polymer in einem Mischer (6) vorgemischt und sodann dosiert dem Knetreaktor (1) zugeführt wird.

4. Verfahren nach einem der Ansprüche 1 bis 3, **dadurch gekennzeichnet, dass** eine Lösungsenthaltpie der Mischung gleichzeitig zum Aufheizen des Produktes genutzt wird.

5. Verfahren nach wenigstens einem der Ansprüche 1 bis 4, **dadurch gekennzeichnet, dass** eine gleichmässige Entgasung über die gesamte Knetzonenlänge erfolgt.

6. Verfahren nach wenigstens einem der Ansprüche 1 bis 5, **dadurch gekennzeichnet, dass** das Produkt eine wesentlich grössere Verweilzeit im Knetreaktor hat.

7. Anlage zur Durchführung des Verfahrens nach wenigstens einem der Ansprüche 1 bis 6, **dadurch gekennzeichnet, dass** der Ein- oder Zweiwellenknetreaktor (1) einen Eingabestutzen (11) für eine Mischung des Polymers und der Schwefelsäure oder zwei getrennte Eingabestutzen (2, 3) für das Polymer und die Schwefelsäure aufweist und der Ein- oder Zweiwellenknetreaktor eine oder zwei Knetwellen zum Homogenisieren und Entgasen der Masse aufweist.

8. Anlage nach Anspruch 7, **dadurch gekennzeichnet, dass** bei einem Zweiwellenknetreaktor (1) die beiden Wellen gleichläufig drehen.

9. Anlage nach Anspruch 7 oder 8, **dadurch gekennzeichnet, dass** dem Knetreaktor (1) ein Mischer (6) vorgeschaltet ist.

10. Anlage nach wenigstens einem der Ansprüche 7 bis 9, **dadurch gekennzeichnet, dass** an den Knetreaktor (1) eine ein- oder zweiwellige Austragseinrichtung (5) mit bevorzugt variabler Drehzahl anschliesst.

11. Anlage nach wenigstens einem der Ansprüche 7 bis 9, **dadurch gekennzeichnet, dass** an den Knetreaktor (1) eine einwellige Austragsschnecke (5.1) einschliesst, deren Drehachse (9) achsparallel zur Achse des Knetreaktors (1) verläuft und die Schnecke fest mit einer der beiden Knetwellen verbunden ist.

## Claims

1. A method for producing a spinning solution for the production of a polymer fibre, in particular a p-aramid fibre, a solvent being added to the polymer, and the solution being mixed, melted, homogenised and degassed and then discharged,
**characterised in that**
liquid sulphuric acid is used as solvent and at least the mixing, homogenisation and degassing takes place in a single-shaft or twin-shaft kneading reactor (1) which is preferably operated continuously.

2. A method according to Claim 1, **characterised in that** the treatment of the polymer and the sulphuric acid takes place under vacuum.

3. A method according to Claim 1 or 2, **characterised in that** the sulphuric acid is pre-mixed with the polymer in a mixer (6) and then is supplied in metered manner to the kneading reactor (1).

4. A method according to one of Claims 1 to 3, **characterised in that** an enthalpy of solution of the mixture is utilised at the same time for heating the product.

5. A method according to at least one of Claims I to 4, **characterised in that** uniform degassing takes place over the entire length of the kneading zone.

6. A method according to at least one of Claims 1 to 5, **characterised in that** the product has a significantly longer residence time in the kneading reactor.

7. An installation for performing the method according to at least one of Claims 1 to 6, **characterised in that** the single-shaft or twin-shaft kneading reactor (1) has a feed port (11) for a mixture of the polymer and the sulphuric acid or two separate feed ports (2, 3) for the polymer and the sulphuric acid, and the single-shaft or twin-shaft kneading reactor has one or two kneading shafts for homogenising and degassing the compound.

8. An installation according to Claim 7, **characterised in that** in the case of a twin-shaft kneading reactor (1) the two shafts rotate in the same direction.

9. An installation according to Claim 7 or 8, **characterised in that** the reactor (1) is preceded by a mixer (6).

10. An installation according to at least one of Claims 7 to 9, **characterised in that** a single-shaft or twin-shaft discharge means (5) with a preferably variable speed of rotation adjoins the kneading reactor (1).

11. An installation according to at least one of Claims 7 to 9, **characterised in that** a single-shaft discharge screw (5,1) adjoins the kneading reactor (1), the axis of rotation (9) of which screw extends paraxially to the axis of the kneading reactor (1), and the screw is connected securely to one of the two kneading shafts.

## Revendications

1. Procédé de fabrication d'une solution de filage pour la fabrication d'une fibre polymère, en particulier d'une fibre de p-aramide, le polymère étant déplacé, mélangé, fondu, homogénéisé et dégazé par un solvant et ensuite distribué,
**caractérisé par le fait**
**qu'**il est utilisé, comme solvant, de l'acide sulfurique liquide et qu'au moins le mélange, l'homogénéisation et le dégazage ont lieu dans un réacteur de pétrissage à un ou deux arbres (1) qui fonctionne, de préférence, en continu.

2. Procédé selon la revendication 1, **caractérisé par le fait que** le traitement du polymère et de l'acide sulfurique a lieu sous vide.

3. Procédé selon la revendication 1 ou 2, **caractérisé par le fait que** l'acide sulfurique est prémélangé avec le polymère dans un mélangeur (6) et ensuite alimenté de manière dosée vers le réacteur de pétrissage (1).

4. Procédé selon l'une des revendications 1 à 3, **caractérisé par le fait qu'**une enthalpie de solution du mélange est utilisée simultanément pour chauffer le produit.

5. Procédé selon au moins l'une des revendications 1 à 4, **caractérisé par le fait qu'**un dégazage uniforme a lieu sur toute la longueur de la zone de pétrissage.

6. Procédé selon au moins l'une des revendications 1 à 5, **caractérisé par le fait que** le produit présente un temps de séjour sensiblement plus long dans le réacteur de pétrissage.

7. Installation pour la mise en oeuvre du procédé selon au moins l'une des revendications 1 à 6, **caractérisé par le fait que** le réacteur de pétrissage à un ou deux arbres (1) présente une tubulure d'entrée (11) pour un mélange du polymère et de l'acide sulfurique ou deux tubulures d'entrée (2, 3) séparées pour le polymère et l'acide sulfurique et que le réacteur de pétrissage à un ou deux arbres présente un ou deux arbres de pétrissage pour l'homogénéisation et le dégazage de la masse.

8. Installation selon la revendication 7, **caractérisé par le fait que**, dans un réacteur de pétrissage à deux arbres (1), les deux arbres tournent dans le même sens.

9. installation selon la revendication 7 ou 8, **caractérisé par le fait que** devant le réacteur de pétrissage (1) est connecté un mélangeur (6)

10. Installation selon au moins l'une des revendications 7 à 9, **caractérisé par le fait qu'**au réacteur de pétrissage (1) vient se raccorder un dispositif de distribution à un ou deux axes (5), de préférence à nombre de tours variable.

11. Installation selon au moins l'une des revendications 7 à 9, **caractérisé par le fait qu'**au réacteur de pétrissage (1) vient se raccorder une vis sans fin de distribution à un axe (5.1) dont l'axe de rotation (9) s'étend parallèle à l'axe du réacteur de pétrissage (1) et que la vis sans fin est rendue solidaire de l'un des deux arbres de pétrissage.
